Europäisches Patentamt

European Patent Office

Office européen des brevets

(19)

(11) EP 1 256 779 A2

(12) # EUROPEAN PATENT APPLICATION

(43) Date of publication:
13.11.2002 Bulletin 2002/46

(51) Int Cl.$^7$: G01B 11/00, G01B 11/24

(21) Application number: 02010103.6

(22) Date of filing: 07.05.2002

(84) Designated Contracting States:
AT BE CH CY DE DK ES FI FR GB GR IE IT LI LU
MC NL PT SE TR
Designated Extension States:
AL LT LV MK RO SI

(30) Priority: 08.05.2001 IT TO20010432

(71) Applicant: Newlast Automation S.r.l.
15057 Tortona (IT)

(72) Inventor: Pozzi, Ugo
76467 Rastatt (DE)

(74) Representative: Bongiovanni, Simone et al
Studio Torta S.r.l
Via Viotti 9
I-10121 Torino (IT)

(54) **A device and method for detecting shapes, in particular models of footwear**

(57)    A device for detecting shapes, in particular models of footwear, in which a device for angular displacement (6, 12, 13) sets a shape (2) in rotation about an axis of rotation (10), and a viewing device (15) detects the three-dimensional co-ordinates P(z,c,p) of a plurality of points ($P_1$, $P_2$, ..., $P_i$, ..., $P_n$), which belong to a plurality of parallel profiles $P_p$ lying on respective different planes $K_p$. The device calculates the spacing between adjacent planes ($K_{p\,i}$ and $K_{p\,i+1}$) according to the characteristics of inclination of the surface (S) of the model (2) with respect to the axis of rotation.

Fig.1

EP 1 256 779 A2

## Description

The present invention relates to a device and a method for detecting shapes, in particular models of footwear.

There are known devices for detecting shapes, in particular models of footwear, designed to set the shape in rotation about a generally vertical axis of rotation and designed to detect, by means of an opto-electronic viewing device, the three-dimensional co-ordinates of points arranged on the surface of the model. The said three-dimensional co-ordinates are normally expressed with respect to a machine reference in which there is present a vertical axis $Z$ parallel to the axis of rotation.

Detection of the points is done in such a way that, for a given value on the axis $Z$, there are detected the three-dimensional co-ordinates of a plurality of points which are arranged on a parallel profile of the model and which lie on a plane perpendicular to the axis of rotation. The three-dimensional viewing device is designed to detect the points for different values of the axis $Z$, in such a way as to scan the model according to a plurality of mutually parallel planes. More in particular, in known devices, adjacent planes are separated from one another along the axis of rotation by a spacing, the value of which is fixed and is independent of the values of inclination of the model with respect to the axis of rotation.

The use of a spacing having a fixed value does not enable high-precision scanning of the model in so far as, in the areas of the model that present a large inclination with respect to the axis of rotation, the spacing between the two adjacent planes frequently proves insufficient for detecting the surface of the model in a complete way. It is obviously not possible to reduce the spacing between the planes in an arbitrary way in that the operations of acquisition and processing of the points on a large number of parallel planes would require too much time.

There is therefore felt the need to provide a device for three-dimensional detection of shapes, in which the spacing between the planes will be managed in a dynamic way, taking into account the characteristics of inclination of the surface of the model with respect to the axis of rotation. The above-mentioned purpose is achieved by the present invention in so far as it relates to a device for detecting shapes, in particular models of footwear, of the type described in Claim 1.

The present invention further relates to a method for detecting shapes of the type described in Claim 7.

The invention will now be illustrated, with particular reference to the attached figures, which represent a nonlimiting embodiment thereof, and in which:

- Figure 1 illustrates, in perspective view, a device for detection of shapes, in particular models of footwear, obtained according to the teachings of the present invention;
- Figure 2 illustrates a geometrical diagram of operations performed by the device and the method of the present invention; and
- Figure 3 illustrates the operations performed according to the method of the present invention.

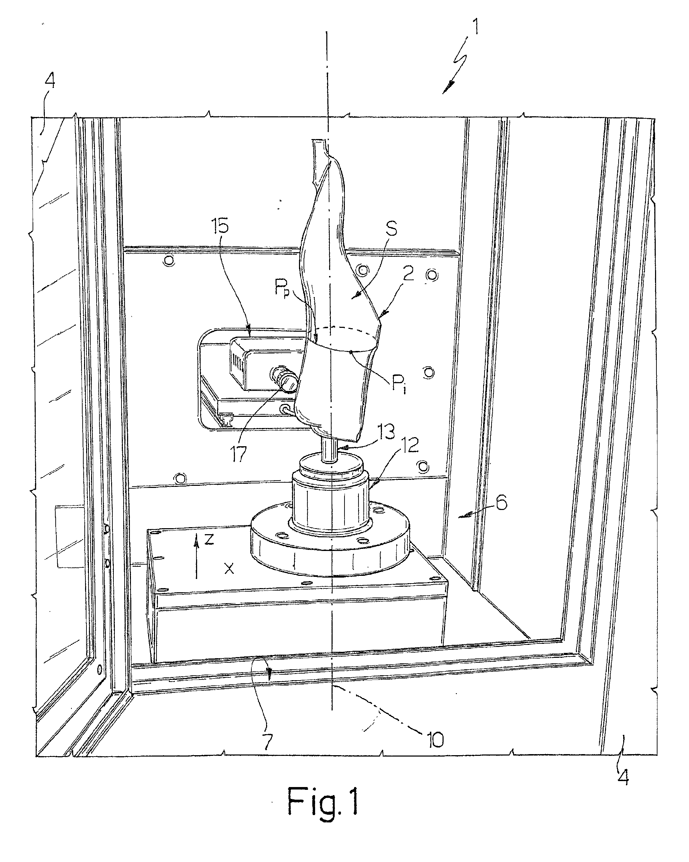

In Figure 1, the reference number 1 designates as a whole a device for detection of shapes, in particular models of footwear 2.

The device 1, in the example of embodiment illustrated, comprises a supporting casing 4 (built preferably from a parallelepipedal metal cabinet) provided with a rotating device 6, which is accessible from outside the casing 4 through an opening 7 and is designed to support and to set in rotation the model 2 about a vertical axis 10. More in particular, the rotating device 6 comprises a cylindrical base 12 fixed to the casing 4 and a shaft 13, coaxial to the axis 10 and angularly mobile under the thrust of an electric motor (not illustrated), which is housed in the casing 4, with respect to the cylindrical base 12. More in particular, the top end of the shaft 13 penetrates inside a coaxial hole (not illustrated) of the shape 2, which is stably fixed on the shaft 13 and is set in angular rotation about the axis 10.

A viewing device 15 (of a known type), housed inside the casing 4, is designed to detect three-dimensional co-ordinates $P(z,c,p)$ of points $P_i$ arranged on the surface $S$ of the model 2. The three-dimensional co-ordinates $P(z,c,p)$ are expressed with respect to a plurality of machine references, in which the axis $Z$ is a vertical axis parallel to the axis 10, the quantity $c$ is an angular value that expresses the angle of rotation about the axis 10 with respect to a vertical reference plane $P_R$, whilst the co-ordinate $p$ represents a detected depth.

Preferably, the device 15 comprises a viewing device 17 - namely a television camera - which can move with reversible motion along the axis $Z$ and which is designed to approach/recede from the model 2.

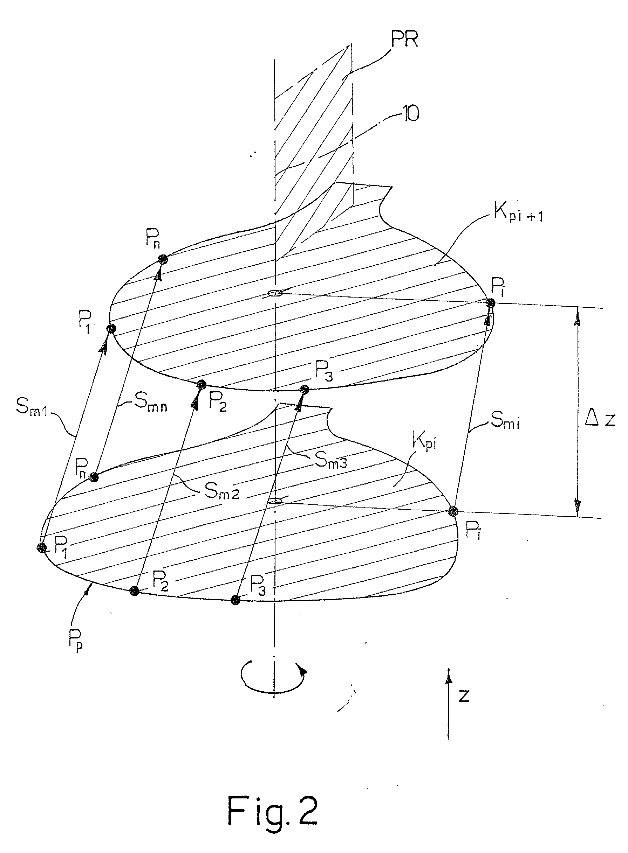

In particular (see Figure 2), the model 2 is set in rotation about the axis 10 during detection of the points $P_i$ in such a way that, for a given value on the axis $Z$, there are detected the three-dimensional co-ordinates $P(z,c,p)$ of a plurality of points $P_1$, $P_2$, ..., $P_i$, ..., $P_n$, which are arranged on a parallel profile $P_p$ of the model 2 and which lie on a plane $K_p$ perpendicular to the axis 10. The device 15 is designed to detect the points $P_i$ for different values on the axis $Z$, so as to scan the model 2 according to a plurality of mutually parallel planes $K_p$. More in particular, adjacent planes $K_{p\,i}$ and $K_{p\,i+1}$ are separated from one another along the axis 10 by a spacing $\Delta z$, the value of which is calculated, according to the present invention, taking into account the characteristics of inclination of the surface $S$ of the model 2 with respect to the axis 10.

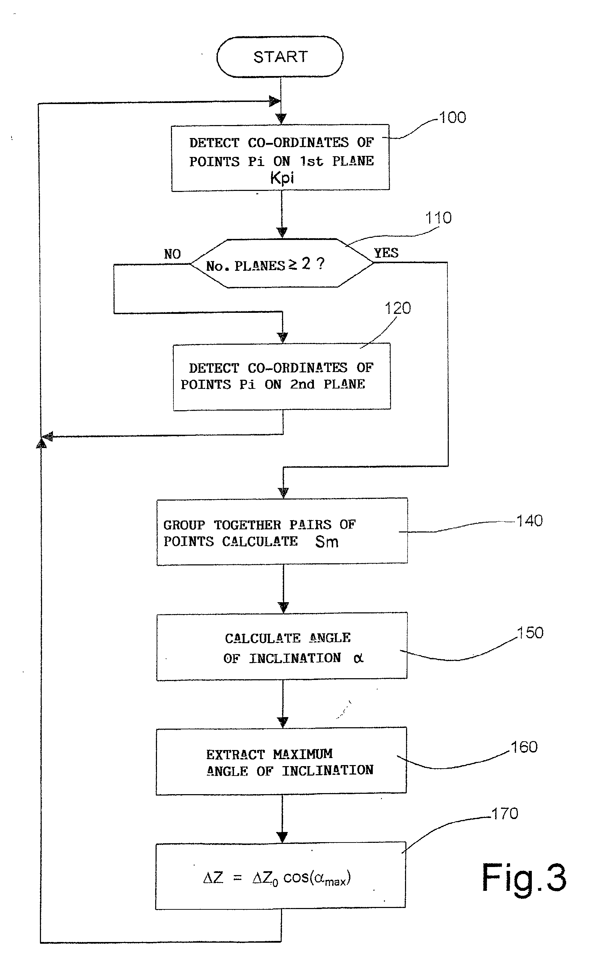

The operations for calculating $\Delta z$ will now be illustrated with reference to Figure 3.

The procedure starts with block 100, which is designed to detect the three-dimensional co-ordinates $P(z,c,p)$ of the points $P_i$ which lie on a first plane $K_{p\,i}$. There is thus detected a plurality $n$ of three-dimensional co-ordinates $P(z,c,p)$ belonging to points $P_{1,1}$, $P_{2,1}$, $P_{3,1}$, ..., $P_{i,1}$, ..., $P_{n,1}$ which lie on a first plane and which belong to a first parallel profile.

The block 100 is followed by a block 110, which is designed to detect whether the points arranged on at least two different planes have been detected, i.e., whether at least two different parallel profiles have been scanned. If they have not (just one parallel profile scanned), the block 110 is followed by a block 120; otherwise (at least two parallel profiles scanned), the block 110 is followed by a block 140. The block 120 detects the three-dimensional co-ordinates $P(z,c,p)$ of the points $P_i$ that lie on a second plane $K_{p\,i+1}$ adjacent to the plane $K_{p\,i}$.

There is thus detected a plurality n of three-dimensional co-ordinates $P(z,c,p)$ belonging to points $P_{1,2}$, $P_{2,2}$, $P_{3,2}$, ..., $P_{i,2}$, ..., $P_{n,2}$, which lie on a second plane and which belong to a second parallel profile. The spacing along the axis $Z$ between the first plane and the second plane is given by a value $\Delta z_0$, which is fixed as a default value (for example determined experimentally). The block 120 is followed by the block 100.

The block 140 is designed to group together pairs of corresponding points: $P_{1,1}$ and $P_{1,2}$, $P_{2,1}$ and $P_{2,2}$, $P_{3,1}$ and $P_{3,2}$, $P_{i,1}$ and $P_{i,2}$, $P_{n,1}$ and $P_{n,2}$ (i.e., points scanned in the same progressive order and/or in the same angular position about the axis 10 on the two different parallel profiles). The above points belong to the first plane and to the second plane. The block is designed to calculate (in a known way - using simple trigonometric equations), for each pair of corresponding points, the vector $S_m$, which extends in three-dimensional space and joins the corresponding points. There is thus calculated a plurality n of vectors $S_{m\,1}$, $S_{m\,2}$, $S_{m\,3}$, ..., $S_{m\,i}$, ..., $S_{m\,n}$.

The block 140 is followed by a block 150, which is designed to calculate (in a known way - using simple trigonometric equations), for each vector $S_m$, the angle of inclination $\alpha$ which the vector $S_m$ forms with the axis 10. There is thus calculated a plurality n of angles of inclination $\alpha_1$, $\alpha_2$, $\alpha_3$, ..., $\alpha_i$, ..., $\alpha_n$. The angle of inclination $\alpha$ assumes a zero value $\alpha = 0$ when the vector $S_m$ is parallel to the axis 10, and assumes a maximum value ($90°$) when the vector $S_m$ is perpendicular to the axis 10.

The block 150 is followed by a block 160, which extracts, in a known way, the angle of inclination having the maximum value $\alpha_{max}$ between the n angles of inclination calculated $\alpha_1$, $\alpha_2$, $\alpha_3$, ..., $\alpha_i$, ..., $\alpha_n$.

The block 160 is followed by a block 170, which is designed to calculate the spacing $\Delta z$ as a function of the angle of inclination having the maximum value $\alpha_{max}$ according to the expression:

$$\Delta z = \Delta z_0 \cos (\alpha_{max}).$$

From the above expression, it may be noted that, should the angle of inclination $\alpha_{max}$ have a zero value, $\alpha_{max} = 0$, i.e., should the vectors $S_m$ be parallel to the axis 10, the value of $\Delta z$ is given by:

$$\Delta z = \Delta z_0 \cos (0) = \Delta z_0.$$

As the angle $\alpha_{max}$ increases from $0°$ to $90°$, the value of $\Delta z$ decreases in that the cosine function is decreasing between $0°$ and $90°$. In this way, as the maximum inclination of the vectors $S_m$ increases, the value $\Delta z$ decreases, i.e., the distance between two adjacent planes on which two successive scans are made decreases. In this connection, the block 170 is followed by the block 100, which now detects the points on a third plane, spaced from the second plane according to the value $\Delta z = \Delta z_0 \cos (\alpha_{max})$ calculated by the block 170.

Next, the block 100 is followed by the blocks 110 and 140 (the planes scanned now certainly number more than two, and hence the block 120 is not selected again) in such a way that the operations referred to above are repeated cyclically, scanning the model of footwear 2 along parallel profiles $P_p$ arranged on respective mutually parallel planes $K_p$. The spacing between the planes, i.e., the value of $\Delta z$, is modified continuously according to the characteristics of inclination of the surface 2 with respect to the axis 10, the said characteristics of inclination being detected by analysis of the angles of inclination. In this way, the system adjusts itself to the characteristics of inclination of the surface $S$ with respect to the axis 10 by modifying the spacing between the planes. After scanning has been carried out for a given length along the axis $Z$, so as to scan the entire shape 2, the procedure terminates.

By way of example, it may be noted that, should an intermediate portion of a model of footwear 2 be examined, the value of the angle $\alpha_{max}$ does not generally assume a high value and is close to the value $\Delta z_0$ fixed by default. Should, instead, a portion of footwear having a large inclination with respect to the axis 10 be examined - for example, a portion close to the neck of a shape of a lady's shoe - the surface $S$ has a large inclination with respect to the axis 10, and the value of the angle $\alpha_{max}$ is greater, so that the spacing between the planes is reduced with respect to the value $\Delta z_0$ set by default.

There is thus provided a device for detecting shapes, in which the spacing between the planes is managed in a dynamic way, taking into account the characteristics of inclination of the surface of the model with respect to the axis of rotation. Finally, it is clear that modifications and variations may be made to the device and to the method for detecting shapes, in particular models of footwear, described herein, without thereby departing from the sphere of protection of the present invention.

## Claims

1. A device for detecting shapes, in particular models of footwear, comprising:

   - means for angular displacement (6, 12, 13) designed to set a shape (2) in rotation about an axis of rotation (10); and
   - measuring means (15) designed to detect the three-dimensional co-ordinates $P(z,c,p)$ of a plurality of points ($P_1$, $P_2$, ..., $P_i$, ..., $P_n$), arranged on a parallel profile $P_p$ of the model (2) and lying on a plane $K_p$ perpendicular to the axis of rotation (10);
   - said measuring means (15) being designed to scan the said model, detecting the points ($P_i$) belonging to a plurality of parallel profiles $P_p$ lying on respective different, mutually parallel, planes $K_p$;

   **characterized in that it comprises** processing means designed to calculate the spacing $\Delta z$ between adjacent planes ($K_{p\,i}$ and $K_{p\,i+1}$) according to the characteristics of inclination of the surface ($S$) of the model (2) with respect to the axis of rotation (10).

2. The device according to Claim 1, in which the said processing means are designed to detect at least one indicator ($S_m$) of the inclination of said surface ($S$) with respect to the axis of rotation and are able to calculate said spacing $\Delta z$ as a function of the quantities associated to said indicator.

3. The device according to Claim 2, in which said indicator of inclination comprises a vector ($S_m$) which extends between corresponding points set on different planes and adjacent to one another; said spacing $\Delta z$ being calculated as a function of the angle that said vector forms with said axis of rotation (10).

4. The device according to Claim 1, in which the said processing means comprise:

   - first calculating means (100), which are designed to detect the three-dimensional co-ordinates $P(z,c,p)$ of points ($P_{1,1}$, $P_{2,1}$, $P_{3,1}$, ..., $P_{i,1}$, ..., $P_{n,1}$), which belong to a first parallel profile and lie on a first plane;
   - second calculating means (110), which are designed to detect the three-dimensional co-ordinates $P(z,c,p)$ of points ($P_{1,2}$, $P_{2,2}$, $P_{3,2}$, ..., $P_{i,2}$, ..., $P_{n,2}$), which belong to a second parallel profile and lie on a second plane;
   - third calculating means (140), which are designed to group together pairs of corresponding points ($P_{1,1}$ and $P_{1,2}$, $P_{2,1}$ and $P_{2,2}$, $P_{3,1}$ and $P_{3,2}$, $P_{i,1}$ and $P_{i,2}$, $P_{n,1}$ and $P_{n,2}$) belonging to the first plane and to the second plane, and which are designed to calculate, for each pair of corresponding points, the vector $S_m$, which extends in three-dimensional space and joins the corresponding points;
   - fourth calculating means (150), which are designed to calculate, for each vector $S_m$, the angle of inclination $\alpha$ which the vector $S_m$ forms with the axis of rotation (10);
   - fifth calculating means (160), which are designed to extract the angle of inclination having the maximum value $\alpha_{max}$ between the angles of inclination calculated ($\alpha_1$, $\alpha_2$, $\alpha_3$, ..., $\alpha_i$, ..., $\alpha_n$); and
   - sixth calculating means (170), which are designed to calculate said spacing $\Delta z$ as a function of the angle of inclination having a maximum value $\alpha_{max}$.

5. The device according to Claim 4, in which said sixth calculating means (170) calculate said spacing $\Delta z$ according to the expression:

$$\Delta z = \Delta z_0 \cos (\alpha_{max})$$

   where $\Delta z_0$ is the initial value of spacing.

6. The device according to Claim 4 or Claim 5, in which pairs of corresponding points ($P_{1,1}$ and $P_{1,2}$, $P_{2,1}$ and $P_{2,2}$, $P_{3,1}$ and $P_{3,2}$, $P_{i,1}$ and $P_{i,2}$, $P_{n,1}$ and $P_{n,2}$) are scanned in the same progressive order and/or are arranged in the same angular position about the axis of rotation (10) on the two different parallel profiles.

7. A method for detecting shapes, in particular models of footwear, comprising the steps of:

   - setting a shape (2) in rotation about an axis of rotation (10); and
   - detecting, during said rotation, the three-dimensional co-ordinates $P(z,c,p)$ of a plurality of points ($P_1$, $P_2$, ..., $P_i$, ..., $P_n$) which are arranged on a parallel profile $P_p$ of the model (2) and which lie on a plane $K_p$ perpendicular to the axis of rotation (10);

   said detection step being repeated, so as to scan said model in order to detect the points ($P_i$) belonging to a plurality of parallel profiles $P_p$ which lie on respective different mutually parallel planes $K_p$, **characterized in that it comprises** the step of calculating the spacing $\Delta z$ between adjacent planes ($K_{p\,i}$ and $K_{p\,i+1}$), taking into account the characteristics of inclination of the surface ($S$) of the model (2) with respect to the axis of rotation (10).

**8.** The method according to Claim 7, in which said calculation step comprises the step of detecting at least one indicator ($S_m$) of the inclination of said surface (**S**) with respect to the axis of rotation (10) and the step of calculating the spacing $\Delta z$ as a function of the quantities associated to said indicator.

**9.** The method according to Claim 8, in which said indicator of **inclination** comprises a vector ($S_m$) which extends between corresponding points set on different planes and adjacent to one another; said spacing $\Delta z$ being calculated as a function of the angle that said vector forms with said axis of rotation (10).

**10.** The method according to Claim 7, in which said calculation step comprises the sub-steps of:

- detecting (100) the three-dimensional co-ordinates **P(z,c,p)** of points ($P_{1,1}$, $P_{2,1}$, $P_{3,1}$, ..., $P_{i,1}$, ..., $P_{n,1}$), which belong to a first parallel profile and lie on a first plane;
- detecting (110) the three-dimensional co-ordinates **P(z,c,p)** of points ($P_{1,2}$, $P_{2,2}$, $P_{3,2}$, ..., $P_{i,2}$, ..., $P_{n,2}$), which belong to a second parallel profile and lie on a second plane;
- grouping together (140) pairs of corresponding points ($P_{1,1}$ and $P_{1,2}$, $P_{2,1}$ and $P_{2,2}$, $P_{3,1}$ and $P_{3,2}$, $P_{i,1}$ and $P_{i,2}$, $P_{n,1}$ and $P_{n,2}$) belonging to the first plane and to the second plane, in order to calculate, for each pair of corresponding points, the vector $S_m$, which extends in three-dimensional space and joins the corresponding points;
- calculating (150), for each vector $S_m$, the angle of inclination $\alpha$ which the vector $S_m$ forms with the axis of rotation (10);
- extracting (160) the angle of inclination having the maximum value $\alpha_{max}$ between the angles of inclination calculated ($\alpha_1$, $\alpha_2$, $\alpha_3$, ..., $\alpha_i$, ..., $\alpha_n$); and
- calculating (170) said spacing $\Delta z$ as a function of the angle of inclination having a maximum value $\alpha_{max}$.

**11.** The method according to Claim 10, in which said step (170) of calculating said spacing $\Delta z$ is performed according to the expression:

$$\Delta z = \Delta z_0 \cos(\alpha_{max})$$

where $\Delta z_0$ is the initial value of spacing.

**12.** The method according to Claim 10 or Claim 11, in which pairs of corresponding points ($P_{1,1}$ and $P_{1,2}$, $P_{2,1}$ and $P_{2,2}$, $P_{3,1}$ and $P_{3,2}$, $P_{i,1}$ and $P_{i,2}$, $P_{n,1}$ and $P_{n,2}$) are scanned in the same progressive order and/or are arranged in the same angular position about the said axis of rotation (10) on the two different parallel profiles.

Fig.1

Fig. 2

START

DETECT CO-ORDINATES OF
POINTS Pi ON 1st PLANE
Kpi

—100

NO / No. PLANES ≥ 2 ? \ YES

—110

DETECT CO-ORDINATES OF
POINTS Pi ON 2nd PLANE

—120

GROUP TOGETHER PAIRS OF
POINTS CALCULATE   Sm

—140

CALCULATE ANGLE
OF INCLINATION α

—150

EXTRACT MAXIMUM
ANGLE OF INCLINATION

—160

—170

$$\Delta Z = \Delta Z_0 \cos(\alpha_{max})$$

Fig.3